# EUROPEAN PATENT APPLICATION

(11) **EP 3 879 680 A1**
(43) Date of publication of application: **15.09.2021**
(21) Application number: 20275057.6
(22) Date of filing: 13.03.2020
(51) Int. Cl.: H02K 7/18, H02K 9/06, H02K 9/20, H02K 11/33

(54) **MOTOR ARRANGEMENT**

(71) Applicant: Hamilton Sundstrand Corporation, Charlotte, NC 28217 (US)
(72) Inventor: DAY, Aaron, Borough Green, TN15 8QT (GB); SAWATA, Tadashi, Coventry, CV3 5BN (GB); DURAIRAJ, Thilak, Solihull,, West Midlands B90 3EE (GB)
(74) Representative: Dehns

(57) **Abstract**

A motor arrangement comprising a motor having a stator (2) and a rotor (3), rotatable relative to the stator to drive a propulsive component (10), the rotor being arranged radially outside the stator, and the stator defining a radially inner space (20), the motor arrangement further comprising motor control components (4) located within the radially inner space. In a preferred embodiment, the motor arrangement further comprises a cooling system being common to the motor and the motor control components and being located in the radially inner space. The common cooling system preferably uses air generated by the propulsive component driven by the motor to cool the motor and the motor control components. The air from the propulsive component is preferably ducted into the radially inner space.

## Description

### TECHNICAL FIELD

The present disclosure is concerned with an integral motor and motor control arrangement.

### BACKGROUND

Electric motors are used in many applications to convert electrical energy to mechanical energy and vice versa. Motors typically comprise a rotor that rotates relative to a stator. For a permanent magnet machine, typically windings are provided on the stator with permanent magnets provided on the rotor. As the rotor rotates relative to the stator, magnetic fields are created which generate torque on a rotor shaft to drive a mechanical device e.g. a fan or propeller.

Electric motors are often used in vehicles and aircraft e.g. in a turbofan assembly or other propulsion assembly, to drive a fan or propeller.

A control system is also required to operate the motor. The control system will include power conversion and control circuitry including inverters, converters and the like as is known in the art.

Because of the high power requirements, it is important to cool the motor. Cooling of the control system is also usually required to avoid damage to, and prolong the life of the components.

Cooling of motor components may be performed by e.g. use of liquid or gas coolant. Fans, water cooling systems, heat sinks and heat exchangers are also known for cooling control circuitry.

Such motor structures can be large and heavy due to the need for the motor components, the control components and their respective cooling systems.

In fields where space is at a premium, e.g. in the aerospace and automotive industries, motor control systems have been designed in which the motor components and the control circuitry are integrated into a single package or unit, thus providing a more compact arrangement. Integrated motor and control system packages are known from e.g. US 2020/0007007, US 5,763,969, US 6,611,071, US 7,362,017, US 8,593,808, US 9,178,400 and US 9,531,239.

Generally, the control circuitry is arranged axially adjacent the motor or on the outside of the motor.

There is a need for a motor control system that is optimised in terms of size and weight and which is also optimised in terms of efficiency and power consumption.

### SUMMARY

The present disclosure provides a motor arrangement comprising a motor having a stator and a rotor, rotatable relative to the stator to drive a propulsive component, the rotor being arranged radially outside the stator, and the stator defining a radially inner space, the motor arrangement further comprising motor control components located within the radially inner space.

In a preferred embodiment, the motor arrangement further comprising a cooling system being common to the motor and the motor control components and being located in the radially inner space. The common cooling system preferably uses air generated by the propulsive component driven by the motor to cool the motor and the motor control components. The air from the propulsive component is preferably ducted into the radially inner space.

In a preferred embodiment, the common cooling system comprises a heat exchanger provided in the radially inner space between the stator and the motor control components to provide cooling to the stator and to the motor control components. The air from the propulsive component is ducted to the heat exchanger.

The motor control components preferably include inverters. These are preferably mounted on a radially inner surface of the heat exchanger.

The common cooling system preferably also comprises heat tubes extending from the heat exchanger to slots of the stator to cool the stator.

The present disclosure also provides a propeller system comprising a propeller and a motor arrangement as described above, the motor rotating the propeller and the propeller being the propulsive component.

A method of cooling a motor arrangement using air generated from rotation of a propulsive component driven by a motor is also disclosed.

### BRIEF DESCRIPTION OF THE DRAWINGS

Fig. 1 shows a motor arrangement according to the disclosure.
Fig. 2 is a sectional view A-A of the motor arrangement of Fig. 1.

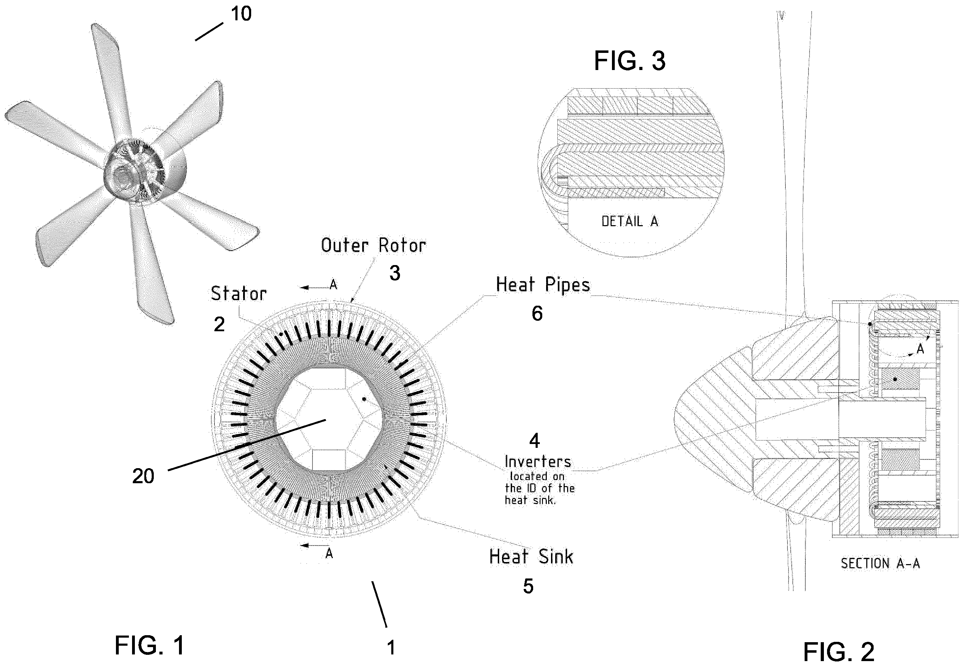

Fig. 2 is a detail showing the heat pipes of Figs 1 and 2.

### DETAILED DESCRIPTION

The described embodiments are by way of example only. The scope of this disclosure is limited only by the claims.

In the arrangement of this disclosure, the motor 1 comprises an inner stator 2 and an outer rotor 3. The outer rotor 3 rotates relative to the stator 2 to generate power due to the resulting magnetic flux. The operation of the motor 1 will not be described further, as such motors are well known in the art.

The motor is controlled, by a motor control and power converter, to drive a propulsive component (not shown).

In this arrangement, to form a compact, integral arrangement, the motor control/power conversion circuitry (hereinafter referred to as 'control circuitry'), here shown as inverters 4, is arranged in the central space 20 defined by the rotor and stator. Because the motor is configured with an outer rotor 3, and the stationary stator 2 defines the inner diameter of the motor 1, the control circuitry 4 can be mounted in this space.

In the preferred embodiment, a common cooling system is provided for both the motor and the control circuitry, whereby air generated by rotation of the propulsive component 10 driven by the motor is used for the cooling.

A heat sink 5 or heat exchanger, is provided in the radially inner central space defined by the stator 2 - i.e. the inverters 4 are located on the inner surface of the heat sink 5.

As the motor rotates the propulsive component 10, the air flow created by the rotation is guided or ducted into the heat sink 5. This is shown by arrows A in Fig. 2. The cooling air in the heat sink 5, which is, in this embodiment, a structure of cooling fins, acts to cool the inverters 4 mounted on the heat sink 5. In addition, the heat sink 5 will cool the back iron of the stator to which it is mounted.

Although the use of air flow from the propulsive component 10 improves efficiency, there is a limit to the power density that can be achieved with this arrangement. The arrangement can be further improved in terms of power density, in a preferred embodiment, by using further passive cooling features that do not add unnecessary complexity and/or weight.

In a most preferred embodiment, as shown, heat pipes 6 extending between the heat sink 5 and the stator slots 7, will provide cooling at the slots and the windings of the motor. The pipes 6, best seen in Fig. 3, sink heat from the windings into the centralised heat sink 5. This feature can be particularly exploited in stators having a high slot count. This reduces the thermal loading on each slot and this enables the use of the heat pipes 6. Heat pipes are less useful in lower slot count motors because there is a natural limitation on how much heat can be transported for a given pipe size.

If the motor winding design uses a 2x3 phase design, the inverters 4 can be arranged in multiple modules and so can be better distributed around the inner surface of the heat sink 5.

Because the external air, used for cooling, is directed to the inner heat sink, rather than to the outside of the motor, other components of the motor such as the windings are cooled indirectly and so are protected from damage due to contaminants in the air. There is, therefore, no need for additional filters or air purifying systems.

Integrating the motor and the motor control system into one package reduces the size and weight as well as manufacturing costs and also provides an arrangement that can utilize a common cooling system.

By using air flow induced by the propulsive component drive by the motor, no additional cooling systems are required, again reducing the overall size, weight and complexity of the arrangement and improving efficiency.

The use of the heat tubes in a preferred embodiment allows external air to be used for cooling without the risk of damaging motor winding and other components.

## Claims

1. A motor arrangement comprising:
a motor having a stator (2), and
a rotor (3), rotatable relative to the stator to drive a propulsive component (10), the rotor being arranged radially outside the stator, and the stator defining a radially inner space (20),
the motor arrangement further comprising:
motor control components (4) located within the radially inner space (20) .

2. The motor arrangement of claim 1, further comprising a cooling system (5) being common to the motor and the motor control components and being located in the radially inner space.

3. The motor arrangement of claim 2, wherein common cooling system uses air generated by the propulsive component (10) driven by the motor to cool the motor and the motor control components.

4. The motor arrangement of claim 3, wherein the air from the propulsive component is ducted into the radially inner space.

5. The motor arrangement of any of claims 2 to 5, wherein the common cooling system comprises a heat exchanger (5) provided in the radially inner space (20) between the stator and the motor control components to provide cooling to the stator and to the motor control components.

6. The motor arrangement of claim 5, wherein the air from the propulsive component is ducted to the heat exchanger.

7. The motor arrangement of any preceding claim, wherein the motor control components include inverters.

8. The motor arrangement of claim 7, when dependent on claim 5 or 6, wherein the inverters are mounted on a radially inner surface of the heat exchanger.

9. The motor arrangement of claim 5 or any claim dependent thereon, wherein the common cooling system also comprises heat tubes (6) extending from the heat exchanger to slots of the stator to cool the stator.

10. A propeller system comprising a propeller and a motor arrangement as claimed in any preceding claim, the motor rotating the propeller and the propeller being the propulsive component.

11. A method of cooling a motor and motor control components comprising:
rotating a propulsive component with the motor under control of the motor control components, and
directing air flow caused by rotation of the propulsive component to cool the motor and the motor control components.
